Europäisches Patentamt

European Patent Office

Office européen des brevets

(19)

(11) **EP 0 878 489 A1**

(12) # EUROPÄISCHE PATENTANMELDUNG

(43) Veröffentlichungstag:
18.11.1998 Patentblatt 1998/47

(51) Int. Cl.$^6$: **C08F 36/04**, C08F 4/52

(21) Anmeldenummer: 98108074.0

(22) Anmeldetag: 04.05.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 14.05.1997 DE 19720171

(71) Anmelder: BAYER AG
51368 Leverkusen (DE)

(72) Erfinder:
• Windisch, Heike, Dr.
51429 Bergisch Gladbach (DE)
• Sylvester, Gerd, Dr.
51375 Leverkusen (DE)
• Taube, Rudolf, Prof. Dr.
83534 Freising (DE)
• Maiwald, Steffen, Dr.
06217 Merseburg (DE)

(54) **Verbindungen der Seltenen Erden und ihre Verwendung als Polymerisationskatalysatoren für ungesättigte Verbindungen**

(57) Die vorliegende Erfindung betrifft einen neuen Katalysator auf Basis von Allylkomplexen der Seltenen Erden der allgemeinen Formel

$$[(C_3R^1{}_5)_rM^1(X)_{2-r}(D)_n]^+ [M^2(X)_p (C_6H_{5-q}R^2{}_q)_{4-p}]^-,$$

die Herstellung des neuen Katalysators sowie seine Verwendung zur Polymerisation ungesättigter Verbindungen, insbesondere konjugierten Dienen, in der Lösung und der Gasphase.

**Beschreibung**

Die Erfindung betrifft einen Katalysator, dessen Herstellung sowie seine Verwendung zur Polymerisation ungesättigter Verbindungen, insbesondere von konjugierten Dienen, in der Lösung und in der Gasphase.

Polybutadien mit einem hohen Anteil an cis-1,4-Einheiten wird seit längerer Zeit in großtechnischem Maßstab produziert und für die Herstellung von Automobilreifen und anderen Gummiwaren verwendet. Die Polymerisation wird dabei in flüssiger Phase unter Verwendung der verschiedensten Katalysatorsysteme durchgeführt. Ein besonders vorteilhaftes Katalysatorsystem zur Herstellung von Polybutadien mit einem hohen Anteil an cis-1,4-Einheiten wird in *EP 11184* beschrieben. Das dort beschriebene und zur Polymerisation von Butadien in Lösung verwendete Katalysatorsystem besteht aus einem Carboxylat der Seltenen Erden, einem Aluminiumalkyl und einer halogenhaltigen Lewis-Säure. Das in *EP 677357* beschriebene Ziegler-Natta-System auf Basis anorganischer Salze der Seltenen Erden verwendet neben halogenidfreien aluminiumorganischen Verbindungen dagegen teil- und/oder perfluorierte bororganische Lewis-Säuren zur Darstellung von 1,4-Polydiolefinen in Lösung. Weiterhin ist bekannt, daß Allylkomplexe der Seltenen Erden in Kombination mit Cokatalysatoren, dabei bevorzugt mit Alumoxanen, in unpolaren Lösungsmitteln, wie Toluol und n-Heptan, geeignete Katalysatoren für die Polymerisation von Butadien mit hohem Gehalt an 1,4-cis-Doppelbindungen sind *[R. Taube, H. Windisch, S. Maiwald, Makromol. Symp. 89(1995) 393-409].*

Die Polymerisation von konjugierten Dienen in Lösung hat den Nachteil, daß bei der Abtrennung des nicht umgesetzten Monomeren und des Lösungsmittels vom gebildeten Polymeren niedermolekulare Verbindungen über Abluft und Abwasser in die Umwelt gelangen können und deshalb entsprechend entsorgt werden müssen. Außerdem müssen große Mengen an Lösungsmitteln eingesetzt und mit hohem Energieaufwand abgetrennt werden. Die Lösungsmittel sind in der Regel brennbar und leicht entzündlich und stellen daher ein Gefahrenpotential dar.

In den letzten Jahren hat sich zur Herstellung insbesondere von Polyethylen und Polypropylen das Gasphasenverfahren als besonders vorteilhaft erwiesen und technisch durchgesetzt. Die Vorteile des Gasphasenverfahrens beruhen insbesondere darauf, daß keine Lösungsmittel eingesetzt werden und Emissionen und Abwasserbelastungen verringert werden können.

Für die Polymerisation von konjugierten Dienen, insbesondere von Polybutadien, aus der Gasphase sind bislang im Vergleich zu der Vielzahl der für Lösungspolymerisation geeigneten Ziegler-Natta-Systeme auf Basis von Titan, Kobalt, Nickel oder Neodym nur wenige Katalysatorsysteme bekannt. In *DE 4334045, EP 727447* und *WO 96/31543* wurden erstmals Katalysatorsysteme beschrieben, die die Polymerisation von konjugierten Dienen, insbesondere Butadien, in der Gasphase ermöglichen. Die dort beschriebenen Katalysatoren bestehen aus Ziegler-Natta-Katalysatoren auf der Basis von Verbindungen der Seltenen Erden, aluminiumorganischen Lewis-Säuren und einem anorganischen Träger. Ein weiteres in *WO 96/31544* beschriebenes Katalysatorsystem besteht aus Allylverbindungen der Seltenen Erden in Kombination mit aluminiumhaltigen metallorganischen Lewis-Säuren auf inerten anorganischen Trägermaterialien. Mit diesen Katalysatoren werden hauptsächlich Polymere mit hohem Gehalt an 1,4-cis-Doppelbindungen aus der Gasphase erhalten. Zur Darstellung von Katalystoren mit ausreichend hoher Aktivität sind jedoch bei allen Katalysatorsystemen größere Mengen aluminiumorganischer Verbindungen als Cokatalysatoren notwendig.

Für die Allylkomplexe der Seltenen Erden, speziell der Tris(allyl)-Komplexe von Neodym und Lanthan, ist bekannt, daß diese Komplexe als definierte Katalysatoren ohne Zugabe von Cokatalysatoren in aromatischen Lösungsmitteln die Butadienpolymerisation unter Bildung von Polymeren mit hauptsächlich 1,4-trans-Doppelbindungen katalysieren, wobei die Aktivitäten gering sind. Die Polymerisation von 1,4-cis-Polybutadien gelingt bei diesen Komplexen erst in Gegenwart von Cokatalysatoren, bevorzugt von Methylalumoxan *[R Taube, H. Windisch, S. Maiwald, H. Hemling, H. Schumann; J. Organomet. Chem., 513 (1996) 49-61].* Wie allgemein bekannt, handelt es sich bei den Alumoxanen um dynamische Gemische verschiedener stukturell undefinierter Verbindungen, die in ihrer handelsüblichen Form als Lösungen in Kohlenwasserstoffen nur begrenzt lagerstabil sind *[„Alumoxane", Macromolecular Symposia 97 (1995)].*

Aufgabe der vorliegenden Erfindung war es daher, Katalysatoren für die Polymerisation von ungesättigten Verbindungen, insbesondere konjugierten Dienen, wie Butadien, zur Verfügung zu stellen, die als definierte Verbindungen ohne Cokatalysatoren für die Polymerisation in Lösung und in der Gasphase geeignet sind.

Es wurde nun überraschend gefunden, daß stukturell definierte Allyl-Komplexe der Seltenen Erden bestehend aus einem strukturell definierten Kation auf Basis der Seltenen Erden und einem korrespondierenden Anion ohne Zugabe von Cokatalysatoren für die Polymerisation von ungesättigten Verbindungen, insbesondere konjugierten Dienen, wie Butadien, geeignet sind, wobei im Vergleich zu den bisher bekannten Katalysatoren bei gleichbleibend hoher 1,4-cis-Selektivität höhere katalytische Aktivitäten erreicht werden.

Gegenstand der Erfindung ist somit ein Katalysator auf Basis von Allyl-Komplexen der Seltenen Erden der Formel (I)

$$[(C_3R^1_5)_rM^1(X)_{2-r}(D)_n]^+[M^2(X)_p(C_6H_{5-q}R^2_q)_{4-p}]^- \qquad (I),$$

wobei

M$^1$  ein dreiwertiges Element der Seltenen Erden mit den Ordnungszahlen 21, 39, 57 bis 71 bedeutet,

X  gleich oder verschieden ist und ein Anion bedeutet,

D  gleich oder verschieden ist und ein neutraler Donorligand bedeutet,

M$^2$  für ein Element der Gruppe IIIb des Periodensystems der Elemente (PSE) *[F.A. Cotton, G. Wilkinson, Anorganische Chemie, 4. Auflage, VCH Verlagsgesellschaft mbH, Weinheim, 1985]* steht,

R$^1$  gleich oder verschieden ist und steht für Wasserstoff, für einen linearen oder verzweigten, gesättigten oder ein- oder mehrfach ungesättigten $C_1$-$C_{30}$-Alkylrest oder $C_5$-$C_{30}$-Cycloalkylrest, die gegebenenfalls ein oder mehrere Heteroatome, wie N, P, O, S enthalten können, für einen gegebenenfalls ein oder mehrere Heteroatome enthaltenden, gegebenenfalls ein- oder mehrfach durch Alkyl-, Alkinyl- oder Alkenylreste mit 1 bis 30 C-Atomen oder Phenylgruppen mit 6 bis 30 Kohlenstoffatomen substituierten $C_6$-$C_{30}$-Arylrest, der mit anderen 6 bis 30 Kohlenstoffatome enthaltenden Aromaten kondensiert sein kann, oder steht für eine durch Alkyl-, Alkenyl- oder Alkinylgruppen mit 1 bis 30 C-Atomen oder Phenylgruppen mit 6 bis 30 C-Atomen substituierte Silylgruppe,

R$^2$  gleich oder verschieden ist und für ein Fluoratom oder eine Fluoralkylgruppe mit 1 bis 10 Kohlenstofftomen steht,

n  für eine beliebige Zahl von 0 bis 10, bevorzugt 0 bis 5,

p  für eine beliebige Zahl von 0 bis 3, bevorzugt 0 bis 2

q  für eine beliebige Zahl von 1 bis 5, bevorzugt 2 bis 5 und

r  für eine beliebige Zahl von 1 bis 2 stehen.

Bevorzugt eingesetzt werden Verbindungen der Formel (I), in denen

M$^1$  bedeutet Lanthan, Cer, Praseodym und Neodym oder ein Gemisch von Elementen der Seltenen Erden, welches mindestens eines der Elemente Lanthan, Cer, Praseodym oder Neodym zu wenigstens 10, bevorzugt 30 Gew.-% enthält, besonders bevorzugt Lanthan, Praseodym oder Neodym,

X  bedeutet eine Allylgruppe der Formel $C_3R^1_5$, z.B. $C_3H_5$, $C_3H_4$(1-Me), $C_3H_4$(2-Me), $C_3H_3$(1,3-Me)$_2$ oder $C_3H$(1,1',3,3'-Me)$_4$, ein Halogenid, wie F, Cl, Br oder J, ein Sulfonat der Formel $O_3SR^1$ oder $O_3SR^2$, z.B. $O_3SCF_3$, ein Amid der Formel $NR^1_2$, z.B. $NPh_2$, $N(C_2H_4NMe_2)_2$, $N(C_2H_4OMe)_2$, $N(SiMe_3)_2$, $N(SiHMe_2)_2$, ein Pyridyl der Formel $NC_5R^1_5$, z.B. $NC_5H_4$(2-$C_2H_5NMe_2$), ein Dipyridyl der Formel $N_2C_{10}R^1_8$, z.B. (2,2'-$NC_5H_4$)$_2$, ein Pyrazolat der Formel $N_2C_3R^1_3$, z.B. $N_2C_3H$(3,5-Ph)$_2$, $N_2C_3H$(3-Me)(5-Ph), $N_2C_3H$(3,5-tert.Bu)$_2$, ein Pyrazolylborat der Formel $R^1B(N_2C_3R^1_3)_3$, z.B. $HB(N_2C_3H_3)_3$, $HB(N_2C_3H(3,5-Me)_2)_3$, ein Benzamidinat der Formel $(R^1N)_2CR^1$, z.B. $(Me_3SiN)_2CPh$, $(Me_3SiN)_2CC_6H_4$(4-Me), $(Me_3SiN)_2CC_6H_4$(4-OMe), ein Alkoholat oder Phenolat der Formel $OR^1$, z.B. OC(tert.-Bu)$_3$, OC(tert.-Bu)$_2$Ph, $OC_6H_2$(2,6-tert.-Bu)$_2$(4-Me), ein Siloxan der Formel $OSiR^1_3$, z.B. OSi(tert.-Bu)$_3$, OSi(Ph)$_3$, ein Thiolat der Formel $SR^1$, z.B. $SC_6H_3$(2,6-tert.-Bu)$_2$, ein Cyclopentadienyl der Formel $C_5H_rR^1_{5-r}$ mit r gleich 0 bis 5, z.B. $C_5H_5$, $C_5Me_5$, $C_5Ph_4H$, $C_5Bz_5$, $C_5H_4$-tert.-Bu, $C_5H_4Me$, $C_5H_3(SiMe_3)_2$, ein Indenyl der Formel $C_9H_{7-s}R^1_s$ mit s gleich 0 bis 7, z.B. $C_9H_7$, $C_9H_4Me_3$, ein Fluorenyl der Formel $C_{13}H_{9-t}R^1_t$ mit t gleich 0 bis 9, ein Phenyl der Formel $C_6H_rR^1_{5-r}$, verzweigte oder unverzweigte primäre, sekundäre oder tertiäre Alkyl-, Alkenyl- oder Alkinylreste mit 1 bis 20 Kohlenstoffatomen, z.B. $CH_3$, $CMe_3$, $CH_2Ph$, $CH_2(C_6H_4$(4-Me)), $CH(SiMe_3)_2$, $CH_2(SiMe_3)$, $CCSiMe_3$, CCPh, wobei R$^1$ und R$^2$ die zuvor beschriebene Bedeutung besitzen,

D  bedeutet ein neutraler Donorligand mit ein, zwei oder drei gleichen oder verschiedenen Donoratomen der Gruppen Vb oder VIb des Periodensystem der Elemente, wie N, P, O, S, mit unverzweigten, verzweigten oder cyclischen, aliphatischen oder olefinischen, primären, sekundären oder tertiären Alkylresten mit 1 bis 20-Kohlenstoffatomen oder unsubstituierten oder substituierten, aromatischen Resten mit 6 bis 20 Kohlenstoffatomen, z.B. der Formel $R^1O\{(CR^1_2)_qO\}_nR^1$, wie $CH_3OCH_3$, $C_2H_5OC_2H_5$, (i-$C_3H_7$)O(i-$C_3H_7$), $CH_3O$(i-$C_3H_7$), (n-$C_4H_9$)O(n-$C_4H_9$), $CH_3O(C_2H_4)OCH_3$, $CH_3O(C_2H_4)O(C_2H_4)OCH_3$, der Formel $O(CR^1_2)_n$, z.B. $OC_4H_8$, $OC_4H_7Me$, der Formel $R^1_2N\{(CR^1_2)_qNR^1\}_nNR^1_2$, wie $N(CH_3)_3$, $N(C_2H_5)_3$, $N(i-C_3H_7)_3$, $NPh(CH_3)_2$, $NPh_2(CH_3)$, $(CH_3)_2N(C_2H_4)N(CH_3)_2$, $(C_5H_{10})N(C_2H_4)N(C_5H_{10})$, der Formel $S(CR^1_2)_n$, wie $SC_4H_8$, $SC_4H_7Me$, ein neutraler

Kohlenwasserstoff mit olefinischen oder aromatischen Gruppen mit 2 bis 40 C-Atomen, wie 1,3-Butadien, Isopren, 2,4-Hexadien 1,5-Dimethylhexa-2,4-dien, $C_6H_6$, $C_6H_5Me$, $C_6H_3Me_3$, $C_6Me_6$, wobei $R^1$, q und n die zuvor beschriebene Bedeutung besitzen, und

$M^2$    Bor oder Aluminium ist.

Als Reste $R^1$ und $R^2$ der Formel (I) werden bevorzugt z.B. genannt:
H, $CH_3$, $C_2H_5$, n-$C_3H_7$, i-$C_3H_7$, n-$C_4H_9$, i-$C_4H_9$, C(tert.-Bu)$_3$, CH(tert.-Bu)$_2$Ph, $CH_2$Ph, $C_6H_5$, $C_6H_4$(4-Me), $C_6H_4$(4-OMe), $C_6H_2$(2,2'-tert.-Bu)$_2$(4-Me), $C_2H_4$OMe, $C_2H_4NMe_2$, $SiMe_3$, $SiHMe_2$, F, $CF_3$, $C_2F_5$ und $C_4F_9$.

Besonders bevorzugt sind Katalysatoren folgender Strukturformel:

$$[La(C_3H_5)_2(THF)_4][B(C_6F_5)_4]$$

$$[La(C_3H_5)_2(THF)_4][B(C_6H_3(2,6-CF_3)_2)_4]$$

$$[La(C_3H_5)_2(TMED)_2][B(C_6F_5)_4]$$

$$[La(C_3H_5)_2(TMED)_2][B(C_6H_3(2,6-CF_3)_2)_4]$$

$$[La(C_3H_5)_2][B(C_6F_5)_4]$$

$$[La(C_3H_5)_2][B(C_6H_3(2,6-CF_3)_2)_4]$$

$$[La(C_3H_5)_2][B(C_3H_5)(C_6F_5)_3]$$

$$[(C_5Me_5)La(C_3H_5)][B(C_6F_5)_4]$$

$$[(C_5Me_5)La(C_3H_5)][B(C_6H_3(2,6-CF_3)_2)_4]$$

$$[(C_5Me_5)La(C_3H_5)][B(C_3H_5)(C_6F_5)_3]$$

$$[(C_5H_5)La(C_3H_5)][B(C_6F_5)_4]$$

$$[(C_5H_5)La(C_3H_5)][B(C_6H_3(2,6-CF_3)_2)_4]$$

$$[(C_5H_5)La(C_3H_5)][B(C_3H_5)(C_6F_5)_3]$$

$$[(C_5Me_4H)La(C_3H_5)][B(C_6F_5)_4]$$

$$[(C_5Me_4H)La(C_3H_5)][B(C_6H_3(2,6-CF_3)_2)_4]$$

$$[(C_5Me_4H)La(C_3H_5)][B(C_3H_5)(C_6F_5)_3]$$

$$[(C_9H_7)La(C_3H_5)][B(C_6F_5)_4]$$

$$[(C_9H_7)La(C_3H_5)][B(C_6H_3(2,6-CF_3)_2)_4]$$

$$[(C_9H_7)La(C_3H_5)][B(C_3H_5)(C_6F_5)_3]$$

$$[(C_9H_5Me_2)La(C_3H_5)][B(C_6F_5)_4]$$

$$[(C_9H_5Me_2)La(C_3H_5)][B(C_6H_3(2,6-CF_3)_2)_4]$$

$$[(C_9H_5Me_2)La(C_3H_5)][B(C_3H_5)(C_6F_5)_3]$$

$$[(C_9H_4Me_3)La(C_3H_5)][B(C_6F_5)_4]$$

$$[(C_9H_4Me_3)La(C_3H_5)][B(C_6H_3(2,6-CF_3)_2)_4]$$

$[(C_9H_4Me_3)La(C_3H_5)][B(C_3H_5)(C_6F_5)_3]$

$[(N(SiMe_3)_2)La(C_3H_5)][B(C_6F_5)_4]$

$[(N(SiMe_3)_2)La(C_3H_5)][B(C_6H_3(2,6\text{-}CF_3)_2)_4]$

$[(N(SiMe_3)_2)La(C_3H_5)][B(C_3H_5)(C_6F_5)_3]$

$[La(C_3H_5)Cl][B(C_6F_5)_4]$

$[La(C_3H_5)Cl][B(C_6H_3(2,6\text{-}CF_3)_2)_4]$

$[La(C_3H_5)Cl][B(C_3H_5)(C_6F_5)_3]$

$[La(C_3H_5)Br][B(C_6F_5)_4]$

$[La(C_3H_5)Br][B(C_6H_3(2,6\text{-}CF_3)_2)_4]$

$[La(C_3H_5)Br][B(C_3H_5)(C_6F_5)_3]$

$[La(C_3H_5)I][B(C_6F_5)_4]$

$[La(C_3H_5)I][B(C_6H_3(2,6\text{-}CF_3)_2)_4]$

$[La(C_3H_5)I][B(C_3H_5)(C_6F_5)_3]$

$[La(C_3H_5)_2][Al(C_6F_5)_4]$

$[La(C_3H_5)_2][Al(C_3H_5)(C_6F_5)_3]$

$[La(C_3H_5)_2][Al(C_6F_5)_3Cl]$

$[Nd(C_3H_5)_2(THF)_4][B(C_6F_5)_4]$

$[Nd(C_3H_5)_2(THF)_4][B(C_6H_3(2,6\text{-}CF_3)_2)_4]$

$[Nd(C_3H_5)_2][B(C_6F_5)_4]$

$[Nd(C_3H_5)_2][B(C_6H_3(2,6\text{-}CF_3)_2)_4]$

$[Nd(C_3H_5)_2][B(C_3H_5)(C_6F_5)_3]$

$[(C_5Me_5)Nd(C_3H_5)][B(C_6F_5)_4]$

$[(C_5Me_5)Nd(C_3H_5)][B(C_6H_3(2,6\text{-}CF_3)_2)_4]$

$[(C_5Me_5)Nd(C_3H_5)][B(C_3H_5)(C_6F_5)_3]$

$[(C_5H_5)Nd(C_3H_5)][B(C_6F_5)_4]$

$[(C_5H_5)Nd(C_3H_5)][B(C_6H_3(2,6\text{-}CF_3)_2)_4]$

$[(C_5H_5)Nd(C_3H_5)][B(C_3H_5)(C_6F_5)_3]$

$[Nd(C_3H_5)Cl][B(C_6F_5)_4]$

$[Nd(C_3H_5)Cl][B(C_6H_3(2,6\text{-}CF_3)_2)_4]$

$$[Nd(C_3H_5)Cl][B(C_3H_5)(C_6F_5)_3]$$

$$[Nd(C_3H_5)_2][Al(C_6F_5)_4]$$

$$[Nd(C_3H_5)_2][Al(C_3H_5)(C_6F_5)_3]$$

$$[Nd(C_3H_5)_2][Al(C_6F_5)_3Cl]$$

Die Katalysatoren der Formel (I) können in isolierter Form oder ohne vorherige Isolierung direkt nach ihrer Herstellung in gelöster Form bei der Polymerisation eingesetzt werden.

Die Darstellung der Katalysatoren (I) kann z.B. wie folgt erfolgen:

Neutrale π-Allylkomplexe eines dreiwertigen Elementes der Seltenen Erden der Formel (II)

$$(C_3R^1_5)_sM^1 (X)_{3-s}(D)n \qquad (II),$$

mit der obigen Bedeutung für $R^1$, $M^1$, X, D und n,
und wobei

s      eine beliebige Zahl von 1 bis 3 ist,

werden in einem geeigneten inerten Lösungsmittel, wie halogenierte Kohlenwasserstoffe, z.B. Methylenchlorid und/oder Chlorbenzol, Ether, z.B. Tetrahydrofuran, Diethylether, Dimethoxyethan und/oder Dioxan, Thioether, z.B. Tetrahydrothiophen, tertiäre Amine, z.B. Triethylamin, sowie aliphatische, cycloaliphatische und/oder aromatische Lösungsmittel, z.B. n-Pentan, n-Hexan, n-Heptan, Cyclohexan, Benzol und/oder Toluol, bei Temperaturen zwischen dem Schmelz- und Siedepunkt des Lösungsmittels, bevorzugt bei -80 bis 140°C, besonders bevorzugt bei -40 bis 80°C, mit einer Lewis-Säure der Formel (III)

$$M^2(X)_m (C_6H_{5-q}R^2_q)_{3-m} \qquad (III),$$

mit der obigen Bedeutung für $M^2$, $R^2$, p und q, und m für beliebige Zahlen von 0 bis 2,
oder einer Brönsted-Säure der Formel (IV)

$$[(D)_nH]^+ [M^2 (X)_p (C_6H_{5-q}R^2_q)_{4-p}]^- \qquad (IV)$$

, mit der obigen Bedeutung für $M^2$, $R^2$, p und q, und m beliebige Zahlen von 0 bis 2,
im Molverhältnis der Reaktanten (II): (III) oder (II): (IV) von 1 : 0,1 bis 100, bevorzugt 1 : 0,2 bis 10, und besonders bevorzugt 1 : 0,5 bis 2, umgesetzt.

Zur Veranschaulichung der allgemeinen Reaktion (II) mit (III) soll das in Reaktionsgleichung (1) dargestellte Beispiel dienen:

$$Nd(C_3H_5)_3 + B(C_6F_5)_3 \rightarrow [Nd(C_3H_5)_2][B(C_3H_5)(C_6F_5)_3] \qquad (1).$$

Zur Veranschaulichung der allgemeinen Reaktion (II) mit (IV) soll das in Reaktionsgleichung (2) dargestellte Beispiel dienen:

$$Nd(C_3H_5)_3+[N(CH_3)_3H][B(C_6F_5)_4] \rightarrow [Nd(C_3H_5)_2][B(C_3H_5)(C_6F_5)_3] + C_3H_6 + N(CH_3)_3 \qquad (2).$$

Entsprechend der Reaktionsbedingungen und des eingesetzten Lösungsmittels können die erhaltenen Komplexe der Formel (I) als Additionsverbindungen, z.B. mit Ethern oder Aminen, die am Allyl-Komplex der Elemente der Seltenen Erden gebunden sind, isoliert werden. Als Ether oder Amine kommen z.B. in Frage:

Diethylether, Tetrahydrofuran, Dimethoxyethan, Dioxan, Trimethylamin, Triethylamin oder Tetramethylethylendiamin.

Beispiele für Verbindungen der Formel (II) sind neutrale π-Allylkomplexe eines dreiwertigen Elementes der Seltenen Erden, wie z.B. die in *WO 96/31544* bereits beschriebenen Allylverbindungen. Weiterhin ist der Einsatz von Additionsverbindungen dieser Allyl-Komplexe mit anderen Verbindungen, wie z.B. Ethern, Aminen und/oder Alkali- oder Erdalkalimetallverbindungen, wie z.B. $LiR^1$, $NaR^1$, $KR^1$ und $MgR^1_2$, mit $R^1$ wie bereits beschrieben, möglich.

Besonders geeignet sind die folgenden Verbindungen der Formel (II):

$Nd(C_3H_5)_3(O_2C_4H_8)$

$La(C_3H_5)_3(O_2C_4H_8)_{1,5}$

$La(C_3H_5)_3 (MeOC_2H_4OMe)$

$La(C_3H_5)_3(Me_2NC_2H_4NMe_2)$

$Nd(C_3H_5)_3$

$La(C_3H_5)_3$

$Cp^*La(C_3H_5)_2$

$CpLa(C_3H_5)_2$

$Cp^*Nd(C_3H_5)_2$

$CpNd(C_3H_5)_2$

$La(C_3H_5)_2Cl(THF)_2$

$Nd(C_3H_5)_2Cl(THF)_2$

$La(C_3H_5)_2Cl(THF)_3$

$La(C_3H_5)_2Br(THF)_2$

$La(C_3H_5)_2I(THF)_2$

$(Ni(SiMe_3)_2)La(C_3H_5)_2(THF)_2$

$(N(SiMe_3)_2)_2La(C_3H_5)(THF)$

$[Li(C_4H_8O_2)_{1,5}][La(C_3H_5)_4]$

$[Li(C_4H_8O_2)_2] [Cp^*La(C_3H_5)_3]$

$[Li(DME)_3] [Cp^*Nd(C_3H_5)_3]$

$[Li(C_4H_8O_2)_2] [CpLa(C_3H_5)_3]$

$[Li(C_4H_8O_2)_2] [CpNd(C_3H_5)_3]$

$[Li(C_4H_8O_2)_2] [Ind La(C_3H_5)_3]$

$[Li(C_4H_8O_2)_2] (Flu La(C_3H_5)_3)$

$[K(THF)_2] [La(C_3H_5)_4]$,

wobei

$Cp^* = C_5Me_5$

$Cp = C_5H_5$

$Ind = C_7H_5$

$Flu = C_9H_7$ bedeutet.

Im Fall der Additionsverbindungen mit Alkali- oder Erdalkalimetallorganylverbindungen ist zur Bildung des Komplexes der Formel (I) die Abspaltung von zwei am Element der Seltenen Erden komplexgebundenen Anionen notwendig. Die Reaktanten (II) : (III) oder (II): (IV) werden dann im Molverhältnis von 1 : 1,1 bis 100, bevorzugt 1 : 1,2 bis 10, und besonders bevorzugt 1 : 1,5 bis 3, umgesetzt.

Als Lewis-Säuren der Formel (III) werden bevorzugt Verbindungen von den dreiwertigen Elemente der Gruppe IIIb, wie Bor und Aluminium, verwendet, an denen mindestens eine mit Fluoratomen oder Fluoralkyl-Gruppen substituierte Phenylgruppe gebunden ist. Besonders bevorzugt sind Lewis-Säuren mit zwei oder drei der beschriebenen fluorsubstituierten Phenylgruppen. Beispiele für geeignete Lewis-Säuren der Formel (III) sind: $B(C_6F_5)_3$, $B(CH_3)(C_6F_5)_2$, $B(C_2H_5)(C_6F_5)_2$, $B(C_6H_4F_2)_3$, $B(C_6H_3F_3)_3$, $B[C_6H_3(CF_3)_2]_3$, $B[C_6H_2(CF_3)_3]_3$, $B(C_2H_5)_2[C_6H_3(CF_3)_2]$, $Al(C_6F_5)_3$, $Al(CH_3)(C_6F_5)_2$, $Al(C_2H_5)(C_6F_5)_2$, $Al[C_6H_3(CF_3)_2]_3$, $Al[C_6H_2(CF_3)_3]_3$.

Als Brönsted-Säuren der Formel (IV) werden bevorzugt Verbindungen von den dreiwertigen Elementen der Gruppe IIIb, wie Bor und Aluminium, verwendet, an denen mindestens eine mit Fluoratomen oder $CF_3$-Gruppen substituierte Phenylgruppe gebunden ist. Besonders bevorzugt sind Lewis-Säuren mit zwei oder drei der beschriebenen fluorsubstituierten Phenylgruppen. Beispiele für geeignete Verbindungen der Formel (IV) sind: $[N(CH_3)_3H][B(C_6F_5)_4]$, $[H(C_2H_5)_3H][B(C_6F_5)_4]$, $[N(C_3H_7)_3H][B(C_6F_5)_4]$, $[N(CH_3)_2(C_2H_5)H][B(C_6F_5)_4]$, $[\{C_6H_5N(CH_3)_2\}H][B(C_6F_5)_4]$, $[N(CH_3)_3H][B\{C_6H_3(CF_3)_2\}_4]$, $[\{C_6H_5N(CH_3)_2\}H][B\{C_6H_3(CF_3)_2\}_4]$, $[N(CH_3)_3H][B\{C_6H_2(CF_3)_3\}_4]$, $[\{C_6H_5N(CH_3)_2\}H][B\{C_6H_2(CF_3)_3\}_4]$, $[N(CH_3)_3H][B(CH_3)(C_6F_5)_3]$, $[\{C_6H_5(CH_3)_2\}H][B(CH_3)(C_6F_5)_3]$, $[N(CH_3)_3H][B(C_2H_5)(C_6F_5)_3]$, $[\{C_6H_5N(CH_3)_2\}H][B(C_2H_5)(C_6F_5)_3]$, $[N(CH_3)_3H][B(C_6H_4F_2)_4]$, $[\{C_6H_5N(CH_3)_2\}H][B(C_6H_4F_2)_4]$, $[N(CH_3)_3H][B(C_6H_3F_3)_4]$, $[\{C_6H_5N(CH_3)_2\}H][B(C_6H_3F_3)_4]$, $[N(CH_3)_3H][Al(C_6F_5)_4]$, $[\{C_6H_5N(CH_3)_2\}H][Al(C_6F_5)_4]$, $[N(CH_3)_3H][Al\{C_6H_3(CF_3)_2\}_4]$, $[\{C_6H_5N(CH_3)_2\}H][Al\{C_6H_3(CF_3)_2\}_4]$, $[N(CH_3)_3H][Al(CH_3)(C_6F_5)_3]$, $[\{C_6H_5N(CH_3)_2\}H][Al(CH_3)(C_6F_5)_3]$, $[N(CH_3)_3H][Al(C_2H_5)(C_6F_5)_3]$, $[\{C_6H_5N(CH_3)_2\}H][Al(C_2H_5)(C_6F_5)_3]$, $[N(CH_3)_3H][Al\{C_6H_2(CF_3)_3\}_4]$, $[\{C_6H_5N(CH_3)_2\}H][Al\{C_6H_2(CF_3)_3\}_4]$.

Ein weiterer Gegenstand der Erfindung ist die Verwendung der erfindungsgemäßen Katalysatoren der Formel (I) für die Polymerisation von ungesättigten Verbindungen in der Lösung und in der Gasphase.

Bedingt durch die große Empfindlichkeit der Allyl-Komplexe der Seltenen Erden gegenüber Spuren von Sauerstoff und Feuchtigkeit setzt eine Polymerisation mit diesen Katalysatoren spezielle Anforderungen, d.h. Polymerisationsanlagen mit Hochvakuumtechnik und speziell nachgereinigte Lösungsmittel, Monomere und Inertgase, voraus. Die Polymerisation kam jedoch auch in Apparaturen, wie sie üblicherweise für die Polymerisation mit Ziegler-Natta-Katalysatoren verwendet werden, und unter Verwendung konventionell gereinigter Lösungsmittel, Monomere und Inertgase durchgeführt werden, wem entsprechende Mengen eines Scavengers zugesetzt werden. Der Einsatz des Scavengers besitzt keinen Einfluß auf die Bildung und Struktur des eigentlichen Katalysators der Formel (I).

Als Scavenger können metallorganische Verbindungen eingesetzt die gegenüber den für eine Katalyse störenden Verunreinigungen, wie z.B. Spuren von Sauerstoff und Feuchtigkeit, eine ausreichend hohe Reaktivität besitzen, weiterhin gegenüber dem Katalysator chemisch inert sind, d. h. die keine Carbanionen auf das Allylkation der Katalysatorverbindung (I) übertragen und somit nicht zur Bildung neutraler Allyl-Komplexe des dreiwertigen Elementes der Seltenen Erden führen, und die im Sinne der Erfindung gegenüber den eingesetzten Monomeren selbst nicht polymerisationsaktiv sind.

Bevorzugt werden als Scavenger Alkyl-, Hydrid- oder gemischte Alkyl-Hydrid-Derivate der Metalle der Gruppen IIa und IIIb des PSE eingesetzt, wie solche der Formel:

$$M^3R^3_z \qquad\qquad (V),$$

wobei

$M^3$  ein Metall der Gruppe IIa oder IIIb des Periodensystem der Elemente,

$R^3$  ein linearer oder verzweigter Alkylrest mit 1 bis 20 Kohlenstoffatomen oder ein $C_5$-$C_6$-Cycloalkylrest oder ein aromatischer Rest mit 6 bis 20 Kohlenstoffatomen oder ein Wasserstoffatom und

$z$  eine Zahl von 2 bis 3 in Abhängigkeit von der Valenz des Metalles ist, wobei im Fall $z$ gleich 3 nur einer der drei Reste $R^3$ ein Wasserstoffatom sein kann

Beispiele für geeignete Verbindungen der Formel (V) sind: Dibutylmagnesium, Butylethylmagnesium, Trimethylaluminium, Triethylaluminium, Tri-n-propylaluminium, Tri-iso-propylaluminium, Tri-n-butylaluminium, Tri-iso-butylaluminium, Tripentylaluminium, Trihexylaluminium, Tricyclohexylaluminium, Tricotylaluminium, Diethylaluminiumhydrid, Di-n-butylaluminiumhydrid und Di-iso-butylaluminiumhydrid.

Es ist auch möglich, dem Katalysator bestehend aus der Katalysatorverbindung (I) oder der Katalysatorverbindung (I) und einem Scavenger noch ein konjugiertes Dien zuzusestzen, wobei dieses Dien das gleiche Dien sein das später mit dem Katalysator polymerisiert werden soll. Bevorzugt werden verwendet Butadien und Isopren.

Das Verhältnis, in dem die Katalysatorverbindung (I) mit Scavenger und/oder Dien eingesetzt wird, kann in weiten Grenzen variiert werden. Das Molverhältnis der Katalysatorverbindung (I) zum Scavenger beträgt 1:0 bis 1:1000, bevorzugt 1:0,5 bis 1:100, besonders bevorzugt 1:1 bis 1:20. Das Molverhältnis der Katalysatorverbindung (I) zum Dien beträgt 1:0 bis 1:10000, bevorzugt 1:0 bis 1:100, besonders bevorzugt 1:0 bis 1:10.

Die Herstellung des zuvor beschriebenen Katalysators kann nach verschiedenen Varianten erfolgen, z.B. wie folgt:

Eine Lösung und/oder Suspension des Katalysators wird hergestellt, indem man den separat hergestellten Katalysator (I) in einem inerten Lösungs- und/oder Verdünnungsmittel löst oder suspendiert. Weiterhin ist es möglich, den Katalysator (I) ohne zusätzliche Isolierung in einem geeigneten Lösungs- und/oder Verdünnungsmittel aus den Verbindungen der Formel (II) und Verbindungen der Formel (III) und/oder (IV) darzustellen, wobei mindestens eine der eingesetzten Verbindungen in dem eingesetzten Lösungsmittel gelöst sein muß. Weiterhin kann bei allen beschriebenen Herstellungsvarianten noch ein Dien anwesend sein. Die Reihenfolge der Zugabe der inerten Lösungs- und/oder Verdünnungsmittel und des Katalysators (I) oder der einzelnen Verbindungen zur in situ Herstellung des Katalysators (I) sowie der wahlweisen Zugabe des Scavengers und/oder des Diens kann beliebig variiert werden.

Als inerte Lösungs- und/oder Verdünnungsmittel können halogenierte Kohlenwasserstoffe, wie Methylenchlorid und Chlorbenzol, sowie aliphatische, cycloaliphatische und/oder aromatische Lösungsmittel, wie Pentan, Hexan, Heptan, Cyclohexan, Benzol und/oder Toluol, einzeln oder im Gemisch eingesetzt werden.

Um den für die Lösungspolymerisation geeigneten Katalysator auch für die Gasphasenpolymerisation vorteilhaft einzusetzen, ist die Heterogenisierung, d.h. das Aufbringen auf einem inerten Trägermaterial, besonders zu empfehlen.

Als Trägermaterial werden teilchenförmige, anorganische Feststoffe oder auch teilchenförmige, polymere organische Feststoffe mit einer spezifischen Oberfläche größer als 10, bevorzugt 10 bis 1000 $m^2$/g (BET) und einem Porenvolumen von 0,3 bis 15, bevorzugt von 0,5 bis 12 ml/g, eingestzt, die sich während der Polymerisationsreaktion inert verhalten.

Die spezifische Oberfläche (BET) wird in üblicher Weise bestimmt [s. z.B. S. Brunauer, P.H. Emmet und Teller, J.

*Amer. Chem. Soc. 60(2) (1938) 309]*, das Porenvolumen wird bestimmt durch die Zentrifugationsmethode *[M. McDaniel, J Colloid Interface Sci. 78 (1980) 31].*

Als anorganische Feststoffe eignen sich insbesondere Silicagele, Tone, Alumosilikate, Talkum, Zeolithe, Ruß, Graphit, Aktivkohle, anorganische Oxyde, wie z.B. Siliciumdioxyd, Aluminiumoxyd, Magnesiumoxyd und Titandioxyd, sowie Siliciumcarbid, bevorzugt Silicagele, Zeolithe und Ruß, besonders bevorzugt Silicagel. Weiterhin sind organische Trägermaterialien geeignet, wie z.B. Polyethylen, Polypropylen, Polystyrol oder Polybutadiene.

Die genannten anorganischen Feststoffe, die der obengenannten Spezifikation genügen und deshalb für den Einsatz geeignet werden beispielsweise näher beschrieben in *Ullmanns, Enzyklopädie der technischen Chemie, Band 21, S. 439 ff. (Silicagele), Band 23, S. 311 ff. (Tone), Band 14, S. 633 ff. (Ruße), Band 24, S. 575 ff. und Band 17, S. 9 ff. (Zeolithe).*

Die anorganischen und organischen polymeren Feststoffe können einzeln oder im Gemisch untereinander eingesetzt werden. Auf 100 g des Trägermaterials werden 0,01g bis 10 g der Katalysatorverbindung (I), bevorzugt 0,5 bis 5 g der Katalysatorverbindung (I) eingesetzt.

Die Herstellung eines trägerfixierten Katalysators ist von dem eingesetzten Trägermaterial abhängig, wobei die Reaktivität des Trägermaterials gegenüber der Katalysatorverbindung (I) oder der einzelnen Verbindungen der Formel (II), (III) und/oder (IV) zur Herstellung der Katalysatorverbindung (I) und dem Scavenger entscheidend ist.

Ist das Trägermaterial gegenüber den anderen Verbindungen chemisch inert, d.h. es findet keine Reaktion des Trägermaterials mit anderen eingesetzten Verbindungen statt, kann die Reihenfolge der Zugabe der inerten Lösungs- und/oder Verdünnungsmittel, der Katalysatorverbindung (I) oder der einzelnen Verbindungen zur Herstellung der Katalysatorverbindung (I), des Trägermaterials und wahlweise auch des Scavengers und des Diens beliebig variiert werden.

Man kann z.B. das Trägermaterial in dem inerten Lösungs- und/oder Verdünnungsmittel aufschlämmen, anschließend den Scavenger dazugeben und schließlich die Katalysatorverbindung (I) oder die Verbindungen (II), (III) und/oder (IV) zur Herstellung der Katalysatorverbindung (I) zugeben. Es ist auch möglich, nach dem gerade beschriebenen Verfahren eine Lösung der Katalysatorverbindung (I) oder eine Lösung aus der Katalysatorverbindung (I) mit dem Scavenger und/oder dem Dien herzustellen und diese Lösung zu dem Trägermaterial, das entweder in einem inerten Lösungs- und/oder Verdünnungsmittel aufgeschlämmt ist oder trocken vorliegt, zu geben.

Ist das Trägermaterial gegenüber den anderen Verbindungen nicht inert, wie es z.B. für Trägermaterialien mit oberflächlichen OH-Gruppen gegenüber metallorganischen Verbindungen bekannt ist, ist die Aktivität des erhaltenen Katalysators von der Reihenfolge der Zugabe der einzelnen Verbindungen abhängig.

In diesem Fall kann man z.B. das Trägermaterial in dem inerten Lösungs- und/oder Verdünnungsmittel aufschlämmen, zuerst den Scavenger und nach einer gewünschten Reaktionszeit die Katalysatorverbindung (I) oder die einzelnen Verbindungen zur Herstellung der Katalysatorverbindung (I) und gegebenenfalls auch das Dien zugeben. Die Zugabe der Katalysatorverbindung (I) oder der einzelnen Verbindungen zur Herstellung der Katalysatorverbindung (I) und gegebenenfalls des Diens kann dann in beliebiger Reihenfolge erfolgen.

Die verwendeten Lösungsmittel können für alle Verbindungen gleich oder verschieden sein bzw. im Gemisch eingesetzt werden. Das verwendete Lösungs- und/oder Verdünnungsmittel wird nach der gewünschten Zeit destillativ, gegebenenfalls im Vakuum, abtrennt, wobei der geträgerte Katalysator als frei fließender Feststoff erhalten wird.

Die Menge des eingesetzten inerten Lösungs- und/oder Verdünnungsmittels kann in weiten Grenzen variiert werden. Aus ökonomischen Gründen wird man die Menge möglichst gering halten. Die minimale Menge richtet sich nach der Menge und der Löslichkeit der einzelnen Verbindungen sowie dem Porenvolumen des Trägermaterials. Bevorzugt wird eine Menge von 10 bis 2000 Teilen des Lösungs- und/oder Verdünnungsmittels, bezogen auf 100 Teile des Trägermaterials, eingesetzt.

Die Herstellung des Katalysators kann in einem weiten Temperaturbereich erfolgen. Im allgemeinen liegt die Temperatur zwischen Schmelz- und Siedepunkt des inerten Verdünnungs- und/oder Lösungsmittels. Üblicherweise wird bei Temperaturen von -20 bis 80°C gearbeitet.

Der erfindungsgemäße Katalysator eignet sich für die Polymerisation von ungesättigten Verbindungen, insbesondere für die Polymerisation von konjugierten Dienen, vorzugsweise von 1,3-Butadien, Isopren, Pentadien und/oder Dimethylbutadien.

Die Polymerisation erfolgt dabei, indem man das konjugierte Dien mit dem beschriebenen Katalysator in Berührung bringt. Für die Lösungspolymerisation werden die Monomere in einem Lösungs- und/oder Verdünnungsmittel gelöst. Für die Gasphasenpolymerisation können dem gasförmig vorliegenden Monomeren weitere Gase zugemischt werden, die entweder der Verdünnung bzw. der Wärmeabführung oder der Regelung des Molekulargewichtes dienen.

Die Polymerisation kann bei Drücken von 1 mbar bis 50 bar, bevorzugt 1 bis 20 bar, durchgeführt werden. Im allgemeinen wird die Polymerisation bei Temperaturen von -20 bis 250°C, bevorzugt bei 0 bis 200°C, besonders bevorzugt bei 20 bis 160°C, durchgeführt.

In einer gängigen Ausführungsform wird bei der Polymerisation von z.B. 1,3-Butadien in Lösung wie folgt verfahren:

Zu einer Mischung von Lösungsmittel und Butadien mit einem Verhältnis von Lösungsmittel : Butadien von 100: 5 bis 40 Gew.-%, bevorzugt 100 : 8 bis 30 Gew.-%, werden die Katalysatorverbindung (I), alternativ mit oder ohne Scavenger und gegebenenfalls mit einem Dien entweder separat oder als Katalysatorgemisch in einem Lösungs- und/oder Verdünnungsmittel, das wie beschrieben hergestellt wird, zugegeben, wobei die verwendeten Lösungsmittel identisch oder verschieden sein können. Die Polymerisation beginnt nach einer Iniitierungsphase von 0,5 bis 30 min in Abhängigkeit vom Lösungsmittel und den Polymerisationsbedingungen, erkennbar an einer Wärmeentwicklung und Viskositätszunahme der Lösung. Die Polymerisation wird ohne oder mit externer Temperaturregelung durchgeführt. Nach Erreichen des gewünschten Umsatzes wird der Katalysator durch Zugabe geringer Mengen beispielsweise an Wasser, Carbonsäuren und/oder Alkoholen desaktiviert.

Den Polymerlösungen werden vor der Aufarbeitung übliche Stabilisatoren, wie z.B. sterisch gehinderte Phenole oder aromatische Amine, in üblichen Mengen zugesetzt. Die Isolierung der Polymere erfolgt durch Eindampfen der Polymerlösung, durch Fällen mit einem Nichtlösungsmittel, wie z.B. Methanol, Ethanol und Aceton, oder durch Wasserdampfdestillation des Lösungsmittels. Die Trocknung erfolgt nach üblichen Verfahren, wie z.B. im Trockenschrank, Vakuumtrockenschrank oder Schneckentrockner.

Die erfindungsgemäß hergestellten Polymere besitzen in Abhängigkeit vom verwendeten Lösungsmittel einen unterschiedlichen Gehalt an 1,4-cis-Doppelbindungen, der z.B. entsprechend den Polymerisationsbedingungen in Methylenchlorid bei 94-99 % und in Toluol bei 78-79 % liegt. Die Anwesenheit des Scavengers hat keinen direkten Einfluß auf die Bildung des Katalysators, bewirkt jedoch v.a. bei Polymerisationslösungen mit einer geringen Katalysatorkonzentration der gegenüber Verunreinigungen sehr empfindlichen Katalysatorverbindung (I) eine Stabilisierung des katalytisch aktiven Komplexes und somit einen Anstieg der Aktivität auf über 8000 kg Polymer pro mol Katalysatorverbindung (I) und Stunde.

Die Gasphasenpolymerisation von z.B. 1,3-Butadien kann in einer gängigen Form in jeder für eine Gasphasenpolymerisation geeigneten Apparatur durchgeführt werden. So kann z.B. ein Rührreaktor, ein Drehreaktor oder ein Fließbettreaktor oder eine Kombination dieser Reaktortypen verwendet werden. Der Zusatz von inerten Pudermitteln, wie Silicagel oder Ruß, während der Gasphasenpolymerisation, ist möglich, war aber bei den erfindungsmäßig beschriebenen Gasphasenpolymerisation nicht notwendig, da eine beginnende Verklebung der gebildeten Kautschukpartikel bei geringem Butadiendruck bereits durch einen geringen Druckanstieg, der durch Zugabe von Monomer und/oder Temperaturerhöhung verursacht wurde, aufgehoben werden konnte und somit die Rieselfähigkeit des Produktes erhalten blieb.

Der erfindungsgemäße Katalysator wird bei der Gasphasenpolymerisation in eine Apparatur überführt, die geeignet ist, den pulverförmigen Katalysator in Bewegung zu halten. Das kann z.B. durch Rühren, Drehen und/oder einen Gasstrom erfolgen. Das zunächst im Gasraum befindliche inerte Gas, z.B. Argon, wird dann durch das gasförmige Monomere ersetzt. Dabei setzt eine sofortige Polymerisation ein und die Temperatur steigt an. Das Monomere wird, gegebenenfalls verdünnt mit einem Inertgas, so schnell dem Reaktor zugeführt, daß die gewünschte Reaktionstemperatur nicht überschritten wird. Die Reaktionstemperatur kann auch auf übliche Weise durch Heizen bzw. Kühlen eingestellt werden. Die Polymerisation wird durch Abstellen der Monomerzufuhr beendet. Das Polymere kann in der bekannten Weise weiterbehandelt werden, indem man den Katalysator desaktiviert und dar Polymere mit z.B. bekannten Alterungsschutzmitteln behandelt.

Die nachfolgenden Beispiele sollen die vorliegend beschriebene Erfindung verdeutlichen.

## Beispiele

Die für die Beispiele 1 bis 9 verwendeten Lösungsmittel wurden mehrere Stunden in einer Argonatmosphäre über dem entsprechenden Reinigungsmittel gekocht (THF (Tetrahydrofuran) mit Natrium/Benzophenon, THF-$d_8$ und $C_6D_6$ mit Natrium-Kalium-Legierung, $CH_2Cl_2$ mit $CaH_2$ und Molsieb 4A) und unmittelbar vor Gebrauch unter Argon abdestilliert. Das für Beispiele 10 bis 26 verwendete Lösungsmittel Toluol wurde unter Stickstoff azeotrop destilliert und dann über eine $Al_2O_3$-Säule geleitet; das Methylenchlorid wurde mehrere Stunden unter Argon über $CaH_2$ gekocht, abdestilliert und unter Schutzgas aufbewahrt. Die Synthesen und Polymerisationen wurden unter Nutzung der Standardschlenktechnik *[S. Herzog, J Dehnert, Z. Chem. 4 (1964) 1]* unter Argon durchgeführt. Die Lösungspolymerisationen wurden unter Argon in mit Septum verschlossenen 0,5l-Flaschen durchgeführt. Die Bestimmung der Mikrostruktur der Polybutadiene erfolgte mittels IR-Spektroskopie.

## Beispiel 1

Darstellung von $[Nd(\pi\text{-}C_3H_5)_2(THF)_4][B\{C_6H_3(2,6\text{-}CF_3)_2\}_4]$

Zur Darstellung des Katalysatorkomplexes wird in einem Schlenkgefäß unter Argon zu einer Lösung von 0,59 g $Nd(\pi\text{-}C_3H_5)_3(O_2C_4H_8)$ in 5 ml Tetrahydrofuran bei 20 °C eine Menge von 1,23 g $[NMe_3H][B(C_6F_5)_4]$ gegeben, daß sich innerhalb von 30 min in der Reaktionslösung auflöst. Die leicht trübe Lösung wird durch Filtration gereinigt und dann im Vakuum bei 20 °C bis zur Trockne eingeengt. Man erhält mit einer Ausbeute von 89 % 1,75 g eines grünen, feinkristallinen Feststoffes der Zusammensetzung [Nd($\pi$-C$_3$H$_5$)$_2$(THF)$_4$][B(C$_6$F$_5$)$_4$].

Eine Katalysator-Stammlösung wurde durch Lösen von 1,75 g des oben beschriebenen Komplexes [Nd($\pi$-C$_3$H$_5$)$_2$(THF)$_4$][B(C$_6$F$_5$)$_4$] in 5 ml CH$_2$Cl$_2$ bei 20 °C hergestellt und für die im folgenden beschriebenen Polymerisation eingesetzt.

<u>Lösungspolymerisation in Toluol</u>

In einem 250 ml Schlenkgefäß werden unter Argon zu einer Lösung von 17,3 g 1,3-Butadien in 150 ml Toluol bei 20°C 0,7 ml einer 2 molaren Lösung von Al(i-C$_4$H$_9$)$_3$ (= TIBA) in Toluol als Scavenger und dann 0,5 ml der oben beschriebenen Katalysator-Stannlösung (d.h. 146 $\mu$mol [Nd(C$_3$H$_5$)$_2$(THF)$_4$][B(C$_6$F$_5$)$_4$]) gegeben. Die Polymerisation wird bei 20°C durchgeführt und nach 60 Minuten durch Zugabe von 10 ml Methanol mit 0,3 g BKF abgestoppt. Das Polymere wird in Methanol gefällt und 24 h bei 60°C im Vakkumtrockenschrank getrocknet. Man erhält 10,2 g Polybutadien (d.h. 59 % Umsatz bei einer Umsatzzahl von 70 kg(BR)/mol(Nd)/h) mit einem Gehalt von 57 % 1,4-cis, 41 % 1,4-trans- und 2 % 1,2-Einheiten.

<u>Lösungspolymerisation in CH$_2$Cl$_2$</u>

In einem 250 ml Schlenkgefäß werden unter Argon zu einer Lösung von 11,6 g 1,3-Butadien in 75 ml Toluol bei 5°C 0,35 ml einer 2 molaren Lösung von TIBA in Toluol als Scavenger und dann 0,25 ml der oben beschriebenen Katalysator-Stammlösung (d.h. 73 $\mu$mol [Nd(C$_3$H$_5$)$_2$(THF)$_4$][B(C$_6$F$_5$)$_4$]) gegeben. Bereits 20 sec. nach Katalysatorzugabe ist eine deutliche Erwärmung verbunden mit einer Viskositätszunahme der Lösung festzustellen. Nach 1 Minute wird die Polymerisation durch Zugabe von 10 ml Methanol mit 0,3 g BKF abgestoppt. Das Polymere wird in Methanol gefällt und 24 h bei 60°C im Vakkumtrockenschrank getrocknet. Man erhält 10,9 g Polybutadien (d.h. 94 % Umsatz bei einer Umsatzzahl von 8900 kg(BR)/mol(Nd)/h) mit einem Gehalt von 88 % 1,4-cis, 10 % 1,4-trans- und 2 % 1,2-Einheiten.

**Beispiele 2 bis 14** NMR-spektroskopische Charakterisierung der Bildungsreaktion des Katalysators (I)

Entsprechend den Angaben in Tabelle 1 wurden die neutralen Allyl-Komplexe der Seltenen Erden der Formel (II) im jeweiligen Lösungsmittel im angegeben Mengenverhältnis mit Verbindungen der Formel (III) oder (IV) bei 25°C umgesetzt und die Reaktionslösungen NMR-spektroskopisch charakterisiert. Bei allen Versuchen konnte eine vollständige Reaktion unter Bildung des Allyl-Komplexes (I) nachgewiesen werden.

Tabelle 1

| $^{11}$B- und $^{29}$Al-NMR-spektroskopische Verschiebung der Borate und Aluminate bei der Bildungsreaktion des Allyl-Komplexes (I) bei 25°C mit äquimolaren Verhältnissen der Verbindungen (II) : (III) von 1:1 und 1:2 | | | | | |
|---|---|---|---|---|---|
| Nr. | Verbindung (II) | Verbindung (III) | LM | $^{11}$B in ppm | $^{29}$Al in ppm |
| 2 | La(C$_3$H$_5$)$_3$(Dioxan)$_{1,5}$ | B(C$_6$F$_5$)$_3$ | THF-d$_8$ | -13,4 | |
| 3 | La(C$_3$H$_5$)$_3$(HMPT)$_2$ | B(C$_6$F$_5$)$_3$ | C$_6$D$_6$ | -13,7/-14,6 | |
| 4 | [Li(Dioxan)$_{1,5}$][La(C$_3$H$_5$)$_4$] | 2 B(C$_6$F$_5$)$_3$ | THF-d$_8$ | -13,4 | |
| 5 | La(C$_3$H$_5$)$_2$Cl(THF)$_2$ | B(C$_6$F$_5$)$_3$ | THF-d$_8$ | -13,4 | |
| 6 | La(C$_3$H$_5$)$_2$Cl(THF)$_2$ | B(C$_6$F$_5$)$_3$ | CH$_2$Cl$_2$ | -14,0 | |
| 7 | La(C$_3$H$_5$)$_2$Br(THF)$_2$ | B(C$_6$F$_5$)$_3$ | THF-d$_8$ | -13,4 | |
| 8 | La(C$_3$H$_5$)$_2$I(THF)$_2$ | B(C$_6$F$_5$)$_3$ | THF-d$_8$ | -13,4 | |
| 9 | Cp*La(C$_3$H$_5$)$_2$ | B(C$_6$F$_5$)$_3$ | THF-d$_8$ | -13,4 | |
| 10 | CpLa(C$_3$H$_5$)$_2$ | B(C$_6$F$_5$)$_3$ | THF-d$_8$ | -13,4 | |
| 11 | La(C$_3$H$_5$)$_2$N(SiMe$_3$)$_2$(THF) | B(C$_6$F$_5$)$_3$ | THF-d$_8$ | -13,4 | |
| 12 | La(C$_3$H$_5$)$_3$(Dioxan)$_{1,5}$ | Al(C$_6$F$_5$)$_3$(OEt$_2$) | THF-d$_8$ | | 122,7 |
| 13 | [Li(Dioxan)$_{1,5}$][La(C$_3$H$_5$)$_4$] | 2 Al(C$_6$F$_5$)$_3$(OEt$_2$) | THF-d$_8$ | | 122,6 |
| 14 | Nd(C$_3$H$_5$)$_3$(Dioxan) | Al(C$_6$F$_5$)$_3$(OEt$_2$) | CH$_2$Cl$_2$ | | 130 |

Zum Test der Polymerisationsaktivität der erhaltenen Komplexe (I) wird das NMR-Rohr im einem Schlenkgefäß unter Argon zerschlagen, das Lösungsmittel im Vakkum destillativ entfernt und der erhaltene Katalysator mit etwa 5 ml einer 2 molaren Lösung von Butadien in Toluol versetzt. In jedem Fall konnte nach einer Reaktionszeit von einer Stunde anhand einer Viskositätszunahme der Lösung eine Polymerisationsaktivität nachgewiesen werden. Die erhaltenen Polymere wurden nicht isoliert.

**Beispiele 15 bis 18** Lösungspolymerisation mit der Katalysatorverbindung $[Nd(C_3H_5)_2][B(C_3H_5)(C_6F_5)_3]$ (in situ Herstellung aus Verbindung (II) und (III) ohne Scavenger)

Die Versuche wurden als Lösungspolymerisationen des 1,3-Butadiens mit Katalysatoren die in situ aus $Nd(C_3H_5)_3$ als Verbindung (II) und $B(C_6F_5)_3$ als Verbindung (III) hergestellt wurden, durchgeführt, vgl. dazu Tabelle 2. Eine definierte Menge von $Nd(C_3H_5)_3$ wurde unter Argon in ein Glasröhrchen abgeschmolzen, in ein Polymerisationsgefäß mit einer Lösung bestehend aus einer variablen Menge eines Lösungsmittels, einer variablen Menge an 1,3-Butadien und bezogen auf die Verbindung (II) einem Moläquivalent von $B(C_6F_5)_3$, eingesetzt als 10 %ige Lösung in Toluol, plaziert und unter Schütteln zerschlagen. Die Polymerisation wurde bei 20°C in einer homogenen Lösung durchgeführt und durch Zugabe von 10 ml Methanol mit 0,3 g BKF abgestoppt. Das Polymer wurde in Methanol gefällt und im Vakuumtrockenschrank bei 60°C getrocknet.

Tabelle 2

| Nr. | $Nd(C_3H_5)_3$ | $B(C_6F_5)_3$* | Lösungs-mittel | Butadien | t | BR | UZ** | cis | trans | 1,2 |
|---|---|---|---|---|---|---|---|---|---|---|
| 15 | 29,8mg | 0,59ml | 10ml $CH_2Cl_2$ | 3,0g | 20min | 1,3g | 35 | 96,8% | 1,2% | 2,0% |
| 16 | 16,3mg | 0,32ml | 150ml $CH_2Cl_2$ | 12,1g | 2,5h | 2,3g | 17 | 96,2% | 1,5% | 2,4% |
| 17 | 18,4mg | 0,37ml | 150ml Toluol | 14,8g | 16h | 5,1g | 5 | 78,6% | 18,9% | 2,6% |
| 18 | 20,7mg | 0,41ml | 150ml Toluol | 7,1g | 1,8h | 5,3g | 38 | 79,4% | 18,1% | 2,5% |

$B(C_6F_5)_3$*: 10 %ige Lösung in Toluol;
UZ**: in kg(BR)/mol(Nd)/h

**Beispiele 19 bis 22** Lösungspolymerisation mit den Katalysatorverbindungen $[Nd(C_3H_5)_2][B(C_3H_5)(C_6F_5)_3]$ (19-24) und $[Nd(C_3H_5)_2][B(C_6F_5)_4]$ (25) (in situ Herstellung aus Verbindung (II) und (III) oder (IV)) und einem Scavenger

Die Versuche wurden als Lösungspolymerisationen des 1,3-Butadiens mit Katalysatoren bestehend aus $Nd(C_3H_5)_3$ als Verbindung (II), $B(C_6F_5)_3$ als Verbindung (III) bzw. $[C_5H_5NMe_2H][B(C_6F_5)_4]$ als Verbindung (IV) und Tri-iso-butylaluminium (TIBA) als Scavenger durchgeführt, vgl. dazu Tabelle 3. Eine definierte Menge von $Nd(C_3H_5)_3$ wurde unter Argon in ein Glasröhrchen abgeschmolzen, in ein Polymerisationsgefäß, das eine Lösung bestehend aus einer variablen Menge eines Lösungsmittels, einer variablen Menge an 1,3-Butadien und bezogen auf die Neodymverbindung eine definierten Menge an TIBA und $B(C_6F_5)_3$ bzw. $[C_6H_5NMe_2H][B(C_6F_5)_4]$ enthält, plaziert und unter Schütteln zerschlagen. Bei Beispiel 19-21 stieg die Temperatur nach etwa 3 min sprunghaft von 20 auf ca. 55°C an, Beispiel 22-25 wurde mit externer Kühlung bei 20°C in einer homogenen Lösung durchgeführt. Durch Zugabe von 10 ml Methanol mit 0,3 g BKF wurde die Polymerisation abgestoppt. Das Polymer wurde in Methanol gefällt und im Vakuumtrockenschrank bei 60°C getrocknet.

Tabelle 3

| Nr | Nd(C₃H₅)₃ | Co-Katalysator | TIBA[b] | Lösungsmittel | C₄H₆ | t |
|----|-----------|----------------|---------|---------------|------|---|
| 19 | 19,7mg | 0,78ml (2) B(C₆F₅)₃[a] | 0,92ml (5) | 150ml CH₂Cl₂ | 31,2g | 5min |
| 20 | 18,2mg | 0,36ml (1) B(C₆F₅)₃[a] | 0,85ml (5) | 150ml CH₂Cl₂ | 33,6g | 5min |
| 21 | 7,7mg | 0,15ml (1) B(C₆F₅)₃[a] | 0,36ml (5) | 150ml CH₂Cl₂ | 26,3g | 5min |
| 22 | 19,9mg | 0,79ml (2) B(C₆F₅)₃[a] | 0,93ml (5) | 150ml CH₂Cl₂ | 19,6g | 25min |
| 23 | 11,1mg | 0,22ml (1) B(C₆F₅)₃[a] | 1,0ml (10) | 150ml CH₂Cl₂ | 49,8g | 20min |
| 24 | 16,9mg | 0,34ml (1) B(C₆F₅)₃[a] | 0,85ml (5) | 150ml Toluol | 19,5g | 95min |
| 25 | 7,6mg | 1,00ml (1) [C₆H₅NMe₂H][B(C₆F₅)₄][c] | 1,42ml (20) | 150ml CH₂Cl₂ | 16,8g | 2min |

Fortsetzung Tabelle 3:

| Nr. | BR | UZ* | 1,4-cis | 1,4-trans | 1,2 | Mn[d] | Mw[e] | Mw/Mn | [η] |
|-----|-----|------|---------|-----------|-----|---------|---------|-------|------|
| 19 | 22,0g | 3584 | 92,7% | 6,3% | 1,0% | 158.000 | 756.000 | 4,8 | 3,20 |
| 20 | 22,5g | 3888 | 93,6% | 5,5% | 0,9% | 133.000 | 608.000 | 4,6 | 2,98 |
| 21 | 10,2g | 4251 | 98,1% | 0,8% | 1,1% | 170.000 | 495.000 | 2,9 | 3,42 |
| 22 | 12,6g | 406 | 97,2% | 1,8% | 1,0% | n.b. | n.b. | n.b. | n.b. |
| 23 | 9,1g | 658 | 98,9% | 0,6% | 0,5% | n.b. | n.b. | n.b. | n.b. |
| 24 | 9,4g | 94 | 77,9% | 19,4% | 2,7% | n.b. | n.b. | n.b. | n.b. |
| 25 | 8,2g | 8657 | 91,2% | 7,4% | 1,4% | n.b. | n.b. | n.b. | n.b. |

a: 10 %ige Lösung B(C₆F₅)₃ in Toluol; in Klammern mol (B)/mol (Nd)

b: 0,4mol/l Lösung TIBA in Toluol; in Klammern mol (Al)/mol (Nd)

c: 0,0266mol/l Lösung [PhNMe₂H][B(C₆F₅)₄] in CH₂Cl₂; in Klammern mol (Al) / mol (Nd)

d: Mn in g/mol; bestimmt über Viskositätsbestimmung

e: Mw in g/mol; bestimmt über Lichtstreuung

UZ*: in kg(BR)/mol(Nd)/h

**Beispiel 26** Katalysator bestehend aus einem Trägermaterial mit Scavenger, behandelt mit einer Lösung der Katalysatorverbindung [Nd(C₃H₅)₂][B(C₃H₅)(C₆F₅)₃] und einem Scavenger

a) Vorbehandlung des Trägers:
Als Träger wurde ein Silicagel von Grace Davison mit einer Oberfläche nach BET von 300 m²/g eingesetzt. Die mittlere Teilchengröße beträgt 50 μm. Das Silicagel wurde 24 Stunden bei 250°C getrocknet. Zu einer Suspension von 28,6 g des getrockneten Silicagels in 200 ml n-Hexan wurden unter Rühren 17,9 ml TIBA getropft. Das behandelte Silicagel wurde nach einer Stunde Rühren in der Reaktionslösung bei 25°C abfiltriert, mit n-Hexan gewaschen und im Vakuum getrocknet.

b) Herstellung des Katalysators :
Zu einer Lösung von 8,8 mg Nd(C₃H₅)₃ in 5 ml Methylenchlorid werden bei 20°C unter Rühren 1,1 ml einer 0,03 molaren Lösung von B(C₆F₅)₃ in Toluol und 0,83 ml einer 0,4 molaren Lösung von TIBA gegeben. Die erhaltene Katalysatorlösung wird nach 10 min Alterung auf 1,57 g des unter a) beschriebenen Trägers gegeben, die Suspension 10 min bei 20°C gerührt. Nach dem Abdestillieren des Lösungsmittels bei 20°C im Vakuum wurde ein frei fließendes Pulver isoliert.

c) Polymerisation:

Der Katalysator wurde unter Argon in eine Polymerisationsapparatur bestehend aus einem Kolben mit Magnetrührer, Manometer und Gasansatz gefüllt. Die Apparatur wurde evakuiert und anschließend mit gasförmigem Butadien befüllt. Die Temperatur der Schüttung wurde durch ein Wasserbad auf 40°C eingestellt. Während der Polymerisation wurde der Katalysator ständig mittels Magnetrührer bewegt. Durch sukzessive Zugabe von Monomeren wurde der Butadiendruck im Polymerisationsgefäß zwischen 1100 und 500 mbar gehalten. Die Polymerisation wurde anhand der Druckabnahme im Polymerisationsgefäß verfolgt. Nach 30 min wurden 2,6 g Polybutadien mit 95,5 % 1,4-cis, 4 % 1,4-trans und 0,5 % 1,2-Einheiten erhalten.

**Beispiel 27** Katalysator bestehend aus einem Trägermaterial mit Scavenger, behandelt mit einer Lösung der Katalysatorverbindung [Nd(C$_3$H$_5$)$_2$][B(C$_3$H$_5$)(C$_6$F$_5$)$_3$] und einem Scavenger

a) Die Vorbehandlung des Trägers erfolgte analog Beispiel 26.

b) Herstellung des Katalysators :
Zu 2,4 g des unter a) beschriebenen Trägers wurden bei 20°C unter Rühren ohne vorherige Alterung nacheinander mit 0,83 ml einer 0,4molaren Lösung von TIBA, 5 ml einer Lösung von 8,8 mg Tris(allyl)neodym Nd(C$_3$H$_5$)$_3$ in Methylenchlorid und 1,1 ml einer 0,03 molaren Lösung von B(C$_6$F$_5$)$_3$ in Toluol gegeben. Die Suspension wird 10 min bei 20°C gerührt. Nach dem Abdestillieren des Lösungsmittels bei 20°C im Vakuum wurde ein frei fließendes Pulver isoliert.

c) Polymerisation:
Die Polymerisation wurde wie unter Beispiel 26 c) beschrieben bei einer Temperatur von 20°C durchgeführt. Nach 30 min 1,2 g und nach 120 min wurden 2,5 g Polybutadien mit 88,1 % 1,4-cis, 9,3 % 1,4-trans und 2,6 % 1,2-Einheiten erhalten.

**Beispiel 28** Katalysator bestehend aus einem Trägermaterial mit Scavenger, behandelt mit einer Lösung der Katalysatorverbindung [Nd(C$_3$H$_5$)$_2$][B(C$_3$H$_5$)(C$_6$F$_5$)$_3$]

a) Die Vorbehandlung des Trägers erfolgte analog Beispiel 26.

b) Herstellung des Katalysators :
Zu einer Lösung von 14,5 mg Nd(C$_3$H$_5$)$_3$ in 5 ml Methylenchlorid werden bei 20°C unter Rühren 1,8 ml einer 0,03molaren Lösung von B(C$_6$F$_5$)$_3$ in Toluol gegeben. Die erhaltene Katalysatorlösung wird nach 10 min Alterung auf 1,95 g des unter a) beschriebenen Trägers gegeben, die Suspension 5 min bei 20°C gerührt. Nach dem Abdestillieren des Lösungsmittels bei 20°C im Vakuum wurde ein frei fließendes Pulver isoliert.

c) Polymerisation:
Die Polymerisation wurde wie unter Beispiel 26 c) beschrieben 11 min bei 20°C und anschließend bei 50°C durchgeführt. Nach 30 min wurden 1,8 g und nach 3 h 8,2 g Polybutadien mit 96,6 % 1,4-cis, 2,2 % 1,4-trans und 1,2 % 1,2-Einheiten erhalten.

**Beispiel 29** Vergleichsbeispiel mit einem Katalysators bestehend aus einem Trägermaterial mit Scavenger und behandelt mit einer Lösung aus einer Verbindung der Formel (II) und einem Scavenger ohne eine Verbindung der Formeln (III) oder (IV)

a) Die Vorbehandlung des Trägers erfolgte analog Beispiel 26.

b) Herstellung des Katalysators :
Zu einer Lösung von 14,5 mg Nd(C$_3$H$_5$)$_3$ in 5 ml Methylenchlorid werden bei 20°C unter Rühren 0,6 ml einer 0,89 molaren Lösung von TIBA in Toluol gegeben. Die erhaltene Katalysatorlösung wird nach 10 min Alterung auf 1,44 g des unter a) beschriebenen Trägers gegeben, die Suspension 5 min bei 20°C gerührt. Nach dem Abdestillieren des Lösungsmittels bei 20°C im Vakuum wurde ein frei fließendes Pulver isoliert.

c) Polymerisation:
Die Polymerisation wurde wie unter Beispiel 26 c) beschrieben bei 50°C durchgeführt. Nach 3 h wurden nur 0,3 g Polybutadien erhalten, die Mikrostruktur wurde nicht bestimmt.

**Beispiel 30** Katalysator bestehend aus einem Trägermaterial behandelt mit einer Lösung der Katalysatorverbindung $[Nd(C_3H_5)_2][B(C_3H_5)(C_6F_5)_3]$ und einem Scavenger

a) Als Trägermaterial wurde mikroporöses Polypropen eingesetzt, das vor Verwendung 3 h bei 75°C im Vakuum getrocknet wurde.

b) Herstellung des Katalysators :

Zu einer Lösung von 14,9 mg $Nd(C_3H_5)_3$ in 7 ml Methylenchlorid werden bei 20°C unter Rühren 1,85 ml einer 0,03 molaren Lösung von $B(C_6F_5)_3$ in Toluol und 0,62 ml einer 0,89 molaren Lösung von TIBA in Toluol gegeben. Die erhaltene Katalysatorlösung wird nach 15 min Alterung auf 2,22 g des unter a) beschriebenen Trägers gegeben und die Suspension 5 min bei 20°C gerührt. Nach dem Abdestillieren des Lösungsmittels bei 20°C im Vakuum wurde ein frei fließendes Pulver isoliert.

c) Polymerisation:

Die Polymerisation wurde wie unter 26 c) beschrieben 11 min bei 20°C und dann bei 50°C durchgeführt. Nach 30 min wurden 5,0 g und nach 3 h 15,1 g Polybutadien mit 93,0 % 1,4-cis, 6,4 % 1,4-trans und 0,6 % 1,2-Einheiten erhalten.

**Patentansprüche**

1. Katalysator auf Basis von Allyl-Komplexen der Seltenen Erden der Formel

$$[(C_3R^1_5)_rM^1(X)_{2-r}(D)_n]^+ \ [M^2(X)_p(C_6H_{5-q}R^2_q)_{4-p}]^-,$$

wobei

$M^1$    ein dreiwertiges Element der Seltenen Erden mit den Ordnungszahlen 21, 39, 57 bis 71 bedeutet,

$X$    gleich oder verschieden ist und ein Anion bedeutet,

$D$    gleich oder verschieden ist und ein neutraler Donorligand bedeutet,

$M^2$    für ein Element der Gruppe IIIb des Periodensystems der Elemente (PSE) *[F.A. Cotton, G. Wilkinson, Anorganische Chemie, 4. Auflage, VCH Verlagsgesellschaft mbH Weinheim, 1985]* steht,

$R^1$    gleich oder verschieden ist und steht für Wasserstoff, für einen linearen oder verzweigten, gesättigten oder ein- oder mehrfach ungesättigten $C_1$-$C_{30}$-Alkylrest oder $C_5$-$C_{30}$-Cycloalkylrest, die gegebenenfalls ein oder mehrere Heteroatome enthalten können, für einen gegebenenfalls ein oder mehrere Heteroatome enthaltenden, gegebenenfalls ein- oder mehrfach durch Alkyl-, Alkinyl- oder Alkenylreste mit 1 bis 30 C-Atomen oder Phenylgruppen mit 6 bis 30 Kohlenstoffatomen substituierten $C_6$-$C_{30}$-Arylrest, der mit anderen 6 bis 30 Kohlenstoffatome enthaltenden Aromaten kondensiert sein kann, oder steht für eine durch Alkyl-, Alkenyl- oder Alkinylgruppen mit 1 bis 30 C-Atomen oder Phenylgruppen mit 6 bis 30 C-Atomen substituierte Silylgruppe,

$R^2$    gleich oder verschieden ist und für ein Fluoratom oder eine Fluoralkylgruppe mit 1 bis 10 Kohlenstofftomen steht,

$n$    für eine beliebige Zahl von 0 bis 10,

$p$    für eine beliebige Zahl von 0 bis 3

$q$    für eine beliebige Zahl von 1 bis 5 und

$r$    für eine beliebige Zahl von 1 bis 2 stehen.

2. Katalysator nach Anspruch 1, dadurch gekennzeichnet, daß zu dem Katalysator (I) ein Scavenger zugesetzt wird in Form einer organometallischen Verbindung der Formel

$$M^3R^3_z,$$

worin

M$^3$ ein Metall der Gruppe IIa oder IIIb des Periodensystem der Elemente ist,

R$^3$ für einen linearen oder verzweigten Alkylrest mit 1 bis 20 Kohlenstoffatomen oder einen C$_5$-C$_{30}$-Cycloalkylrest oder einen aromatischen Rest mit 6 bis 20 Kohlenstoffatomen oder ein Wasserstoffatom steht,

z eine Zahl von 2 bis 3 in Abhängigkeit von der Valenz des Metalles ist, wobei im Fall z gleich 3 nur eine der drei Reste R$^3$ ein Wasserstoffatom sein kann,

und wobei das Molverhältnis von Katalysator (I) zu Scavenger 1:0 bis 1:1000 beträgt.

3. Katalysator nach Ansprüchen 1 und 2, dadurch gekennzeichnet, daß dem Katalysator ein inerter, teilchenförmiger, anorganischer oder organischer Feststoff mit einer spezifischen Oberfläche größer als 10 m$^2$/g (BET) und einem Porenvolumen von 0,3 bis 15 ml/g zugesetzt wird, wobei der Katalysator in Mengen von 0,01 g bis 10 g, bezogen auf 100 g Trägermaterial, eingesetzt wird.

4. Verfahren zur Herstellung eines Katalysators gemäß Anspruch 1, dadurch gekennzeichnet, daß eine Verbindung der Formel

$$(C_3R^1_5)_sM^1(X)_{3-s}(D)_n,$$

in der R$^1$, M$^1$, X, D und n die in Anspruch 1 beschriebene Bedeutung haben,
mit einer Verbindung der Formel

$$M^2 (X)_m (C_6H_{5-q}R^2_q)_{3-m},$$

oder mit einer Verbindung der Formel

$$[(D)_nH][M^2(X)_r(C_6H_{5-q}R^3_q)_{4-r}],$$

worin
M$^2$, X, R$^2$, D, n, p und q die in Anspruch 1 beschriebene Bedeutung haben,

m eine beliebige Zahl von 0 bis 2 ist und

s eine beliebige Zahl von 1 bis 3 ist.

in einem inerten Lösungsmittel und/oder Verdünnungsmittel bei Temperaturen von -80 bis 140°C im Molverhältnis Verbindung (II) : Verbindung (III) oder (IV) von 1:0,1 bis 10 umgesetzt wird.

5. Verwendung des Katalysators nach Anspruch 1 zur Polymerisation von ungesättigten Verbindungen, insbesondere von konjugierten Dienen, in der Lösung und in der Gasphase.

**Europäisches
Patentamt**

**EUROPÄISCHER RECHERCHENBERICHT**

Nummer der Anmeldung

EP 98 10 8074

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | TAUBE R ET AL.: "Complex catalysis. XXXVII. .eta.2,.eta.2-Dodeca-2(e),10(Z),10(Z)-triene-1-ylnickel(II) tetrakis'3,5-bis(trifluorometyl)phenyl!borate as catalyst for 1,4-cis polymerization of butadienes. Activity and selectivity of C12-allylnickel(II) cations" JOURNAL OF ORGANOMETALLIC CHEMISTRY., 1992, Seiten 428-431, XP002075281 LAUSANNE CH * Seite 436 * | 1 | C08F36/04 C08F4/52 |
| D,A | WO 96 31544 A (BAYER AG ;TAUBE RUDOLF (DE); MAIWALD STEFFEN (DE); RUEHMER THOMAS) 10. Oktober 1996 * Ansprüche * | 1 | |

RECHERCHIERTE SACHGEBIETE (Int.Cl.6)

C08F

Der vorliegende Recherchenbericht wurde für alle Patentansprüche erstellt

| Recherchenort | Abschlußdatum der Recherche | Prüfer |
|---|---|---|
| DEN HAAG | 24. August 1998 | Van Humbeeck, F |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
 
& : Mitglied der gleichen Patentfamilie,übereinstimmendes
   Dokument

EPO FORM 1503 03 82 (P04C03)